Europäisches Patentamt

European Patent Office

Office européen des brevets

(11) Numéro de publication: **0 245 123 B1**

(12) **FASCICULE DE BREVET EUROPEEN**

(45) Date de publication de fascicule du brevet: **14.10.92**

(51) Int. Cl.5: **G06F 3/023**, G06F 3/02, G06F 1/00

(21) Numéro de dépôt: **87400512.7**

(22) Date de dépôt: **09.03.87**

(54) **Clavier universel pour unité centrale à microprocesseur.**

(30) Priorité: **10.03.86 FR 8603329**

(43) Date de publication de la demande:
**11.11.87 Bulletin 87/46**

(45) Mention de la délivrance du brevet:
**14.10.92 Bulletin 92/42**

(84) Etats contractants désignés:
**AT BE CH DE ES FR GB GR IT LI LU NL SE**

(56) Documents cités:
**EP-A- 0 089 876
GB-A- 1 568 895
GB-A- 2 040 089
US-A- 3 600 592**

**PATENT ABSTRACTS OF JAPAN, vol. 7, no.
125 (P-200)[1270], 31 mai 1983; & JP-A-58 43
027 (CANON K.K.) 12-03-1983**

**IBM TECHNICAL DISCLOSURE BULLETIN, vol.
27, no. 4A, septembre 1984, page 1999, New
York, US; G.C. CHUI et al.: "Keyboard inhibit
mode for electronic typewriter"**

**IBM TECHNICAL DISCLOSURE BULLETIN, vol.
25, no. 4, septembre 1982, pages 1975-1977,
New York, US; J.I. COMPTON: "Theft protection for typewriters"**

**IBM TECHNICAL DISCLOSURE BULLETIN, vol.
27, no. 4A, septembre 1984, pages 2171,2172,
New York, US; R.D. MATHEWS:
"Contamination shielded retro-reflective
overlay sensor"**

**WIRELESS WORLD, vol. 87, no. 1545, juin
1981, pages 77,78, Sheepen Place, Colchester, GB; M.D. ALGER et al.: "Remote keyboard
interface"**

(73) Titulaire: **CRITERES DIFFUSION
38 Rue des Martyrs
F-75009 Paris(FR)**

(72) Inventeur: **Roche, Patrick
16, rue Laennec
F-78330 Fontenay le Fleury(FR)**

(74) Mandataire: **Debay, Yves
Cabinet Yves Debay, 122 Elysee 2
F-78170 La Celle Saint Cloud(FR)**

## Description

La présente invention concerne un clavier universel pour unité centrale à microprocesseur et l'utilisation de ce clavier avec un micro ordinateur pour s'adapter à des applications multiples telles que, par exemple, la gestion d'hôtels, de restaurants, de commerces, ou de sociétés de service.

Il est connu des claviers pour micro-ordinateur comprenant un ensemble de touches alpha numériques et en général quelques touches de fonction dont l'affectation est variable et dépendante du logiciel d'application utilisé. En général, sur ces claviers, le nombre de touches de fonction est limité à dix et constituent des commandes variables suivant les logiciels d'application différents.

Il est également connu, pour permettre d'aider l'utilisateur de ces touches de fonction dans la mémorisation des commandes constituées par ces touches de fonction, d'associer à ces touches un petit livret comportant une ouverture encadrant ces touches et en regard des touches de fonction des inscriptions précisant, en fonction du logiciel d'application, les commandes exécutées par ces touches. Ce petit livret a simplement une fonction de mémento et ne commande pas l'affectation des touches en fonction de la position des pages du livret.

Le brevet US 3 600 592 enseigne également un clavier qui peut être, par exemple, utilisé pour l'enseignement télévisuel en faisant apparaître une information pré-enregistrée. Ce clavier comporte des touches à affectation variable, un livret amovible comportant des pages indiquant l'affectation des touches, des moyens de détection à distance de la position des pages du livret et de l'identité du livret, des moyens de fournir un code représentant la position des pages du livret et son identité. Un tel dispositif présente l'inconvénient que la signification des touches est déduite par la machine connectée au clavier à partir du code envoyé indiquant la page et l'identité du livret et d'un signal indiquant que la touche a été enfoncée. De tels dispositifs présentent l'inconvénient de nécessiter pour chaque application une machine particulière spécifiquement développée pour s'adapter à ce type de clavier et une connexion particulière.

Il est connu également, dans le domaine des caisses enregistreuses, des caisses dont l'affectation des touches peut être modifiée en fonction de la position des pages d'un livret qui figure en regard des touches, affectation qui est figée pour une application déterminée. Ainsi, chaque caisse enregistreuse est personnalisée pour chaque application à un commerce donné. Toutefois ce dispositif manque de souplesse car chaque fois que l'on change d'application, il faut changer de caisse enregistreuse, les livrets étant solidaires des caisses enregistreuses par le système de détection de la position des pages . Enfin, ces caisses enregistreuses ne permettent pas une gestion et l'utilisation d'un programme d'application permettant d'effectuer, par exemple, la gestion des stocks ou la comptabilité. Dans ce cas, si l'on veut aboutir à un tel système, on est obligé de coupler la caisse enregistreuse avec un micro ordinateur ou un ordinateur.

Un premier but de l'invention est de proposer un clavier qui puisse être utilisé avec des unités centrales à microprocesseur trouvées couramment dans le commerce et qui permette aisément de modifier l'affectation des touches en fonction des applications envisagées sans pour autant nécessiter de modifications sur le matériel.

Ce premier but est atteint par le fait que le clavier comporte un ensemble de touches à affectation variable, un livret amovible comportant au moins deux pages indiquant l'affectation des touches, des premiers moyens de détection à distance de la position des pages du livret, des seconds moyens pour fournir à l'unité centrale à microprocesseur en réponse à la détection de la position des pages du livret et en réponse à l'actionnement d'une touche du clavier, un code dépendant de la position des pages du livret, lesdits seconds moyens comprenant une interface de clavier à balayage, un microprocesseur, un bus de données et une mémoire morte programmable, ladite interface de clavier à balayage étant connectée par le bus de données au microprocesseur et à la mémoire morte programmable contenant des tables de correspondance (T1,T4) entre les touches et les codes à fournir à l'unité centrale selon la position des pages du livret détectée par les premiers moyens de détection à distance.

Un deuxième but de l'invention est de proposer un clavier universel qui permette d'effectuer des échanges bidirectionnels avec l'unité centrale en mode esclave.

Ce deuxième but est atteint par le fait que le clavier comporte des troisièmes moyens de stockage momentané des codes ASCII à transmettre et correspondant à l'actionnement d'un certain nombre de touches et un circuit universel asynchrone d'émission et de réception fonctionnant en esclave par rapport à l'unité centrale.

Selon une autre caractéristique, le clavier comporte une mémoire morte de stockage du programme de gestion du clavier et des commandes provenant de l'unité centrale.

Selon une autre caractéristique, les troisièmes moyens de stockage des codes ASCII sont constitués d'une mémoire vive.

Un autre but de l'invention est de constituer un clavier universel qui puisse fonctionner comme un clavier alpha-numérique classique pour micro-ordinateur ou ordinateur.

Ce but est atteint par le fait que les touches à affectation variable comportent sur leur face supérieure les gravures d'un clavier alphabétique, la sélection dans la mémoire morte programmable de la table des codes ASCII correspondant aux inscriptions alphabétiques étant effectuées suite à un ordre transmis par l'unité centrale du micro- ordinateur au clavier.

Un autre but de l'invention est un mode de réalisation particulier du livret de façon à le rendre amovible et de façon à permettre sa coopération avec des touches de forme particulière pour éviter que les dimensions du clavier ainsi obtenu ne croissent de façon démesurée.

Selon une caractéristique, ce but est atteint par le fait que le livret amovible comporte une reliure en anneaux se prolongeant au-delà du format des pages par des languettes qui se logent sous la face avant du clavier grâce à une découpe pratiquée dans la face avant dudit clavier dans une zone adjacente à l'ensemble des touches à affectation variable, et des encoches disposées en bordure de page en vis-à-vis des premiers moyens de détection.

Selon une autre caractéristique, le clavier comporte deux ensembles de touches à affectation variable séparés par une zone de la face avant dudit clavier comportant une ouverture de dimension adaptée à la réception de la reliure du livret amovible.

Selon une autre caractéristique, le format des pages du livret amovible est légèrement supérieur à l'emplacement occupé par un ensemble de touches, les touches d'un ensemble comportant des formes saillantes adaptées pour laisser entre elles des espaces, le livret comportant des découpes adaptées aux formes saillantes de façon à ce que les parties restantes supportant les légendes viennent se placer à proximité de la touche concernée dans les espaces libres.

Selon une autre caractéristique, les découpes sont des ouvertures rectilignes.

Selon une autre caractéristique, les ouvertures sont pratiquées suivant une direction perpendiculaire à la reliure.

Selon une autre caractéristique, les touches sont constituées par des cabochons creux ayant une base cubique solidaire sur une face d'une forme saillante constituée par un parallèlépipède rectangulaire de section inférieure à la section du cube et correspondant à la largeur des découpes.

Selon une autre caractéristique, le microprocesseur lit dans une première étape les données délivrées par les photo-récepteurs des premiers moyens de détection et dans une deuxième étape les données délivrées par l'interface clavier pour ensuite adresser la mémoire morte programmable qui fournit les codes ASCII en fonction du résultat de la première lecture et des données délivrées par l'interface clavier à balayage dans la deuxième étape.

Un autre but de l'invention est l'utilisation du clavier avec un micro-ordinateur et un logiciel d'application qui permette une adaptabilité très grande du système en fonction du type de commerce ou de service auquel on veut l'appliquer.

Ce but est atteint par le fait que l'ensemble clavier, micro-ordinateur, logiciel d'application constitue un système de gestion émulant un fonctionnement de caisse enregistreuse adaptable au type de commerce ou de service par changement du livret et des données contenues dans la mémoire morte programmable.

Enfin, un dernier but de l'invention est de permettre le verrouillage du fonctionnement du clavier pour un logiciel d'application, un type de micro-ordinateur et un numéro d'utilisateur ou de machine.

Ce but est atteint par le fait que la mémoire morte programmable contient en plus des tables de décodage du clavier, modifiables selon les applications, des codes d'accès permettant de verrouiller le fonctionnement du clavier pour le logiciel d'application envisagé, pour le type de micro-ordinateur utilisé, et pour le numéro d'utilisateur ou de machine.

D'autres caractéristiques et avantages de la présente invention apparaîtront plus clairement à la lecture de la description ci-après, décrivant un mode de réalisation de l'invention en relation avec les figures dans lesquelles :

- la figure 1 représente une vue en coupe transversale du clavier;
- la figure 2 représente une vue éclatée en perspective des principaux éléments constitutifs du clavier;
- la figure 3 représente une vue de dessus du clavier;
- la figure 4 représente le schéma fonctionnel du circuit électronique incorporé au clavier.

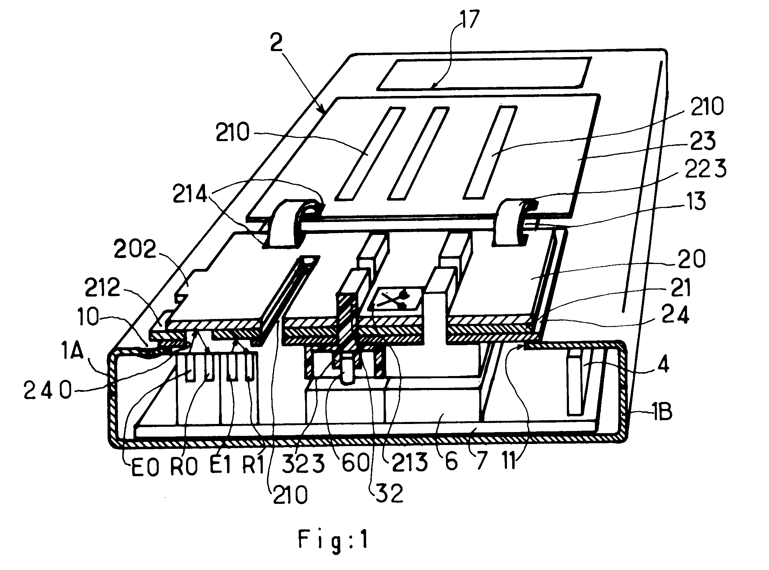

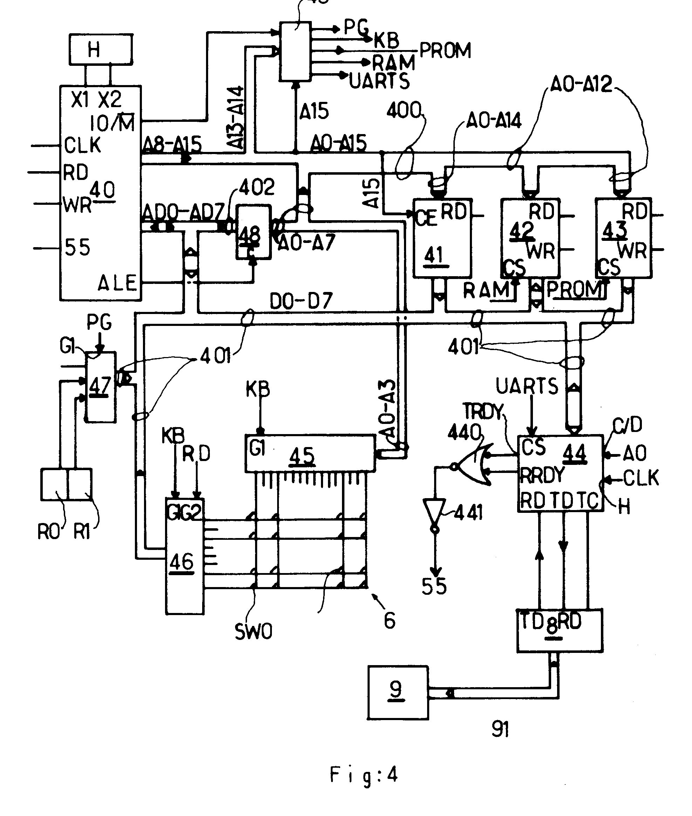

Le clavier, objet de l'invention, va maintenant être décrit en liaison avec les figures 1 à 3 pour ce qui concerne la partie matérielle et avec la figure 4 pour ce qui concerne la partie électronique.

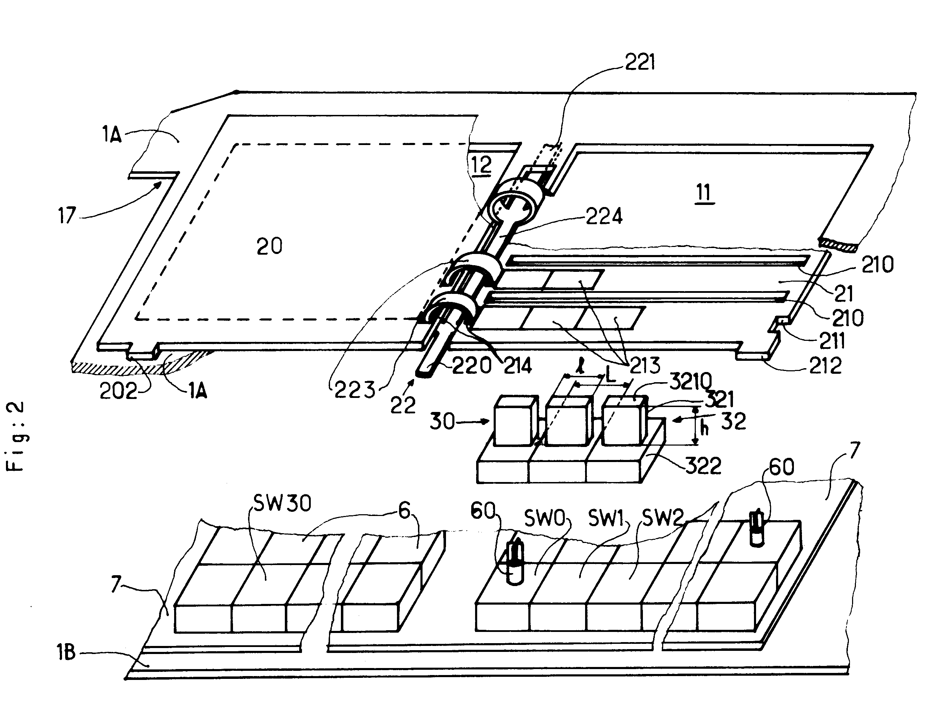

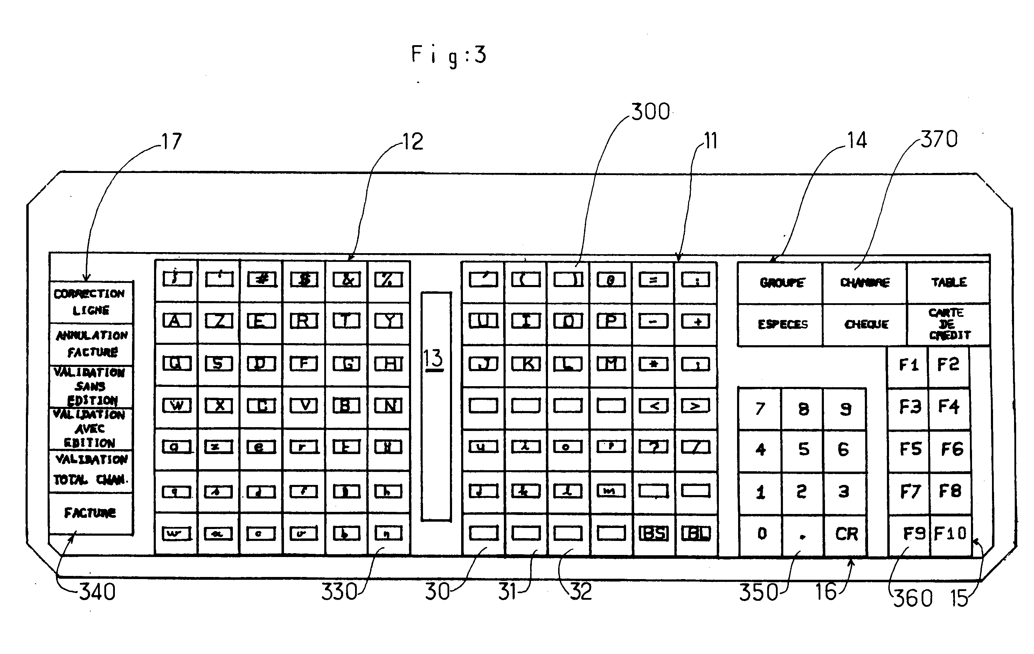

Le clavier comporte un boîtier (1) formé d'un demi boîtier inférieur (1B) et d'un demi-boîtier supérieur (1A). Le demi boîtier supérieur (1A) comporte sur sa face supérieure des ouvertures (11,12,17,14,15,16, figure 3) au travers desquelles passent des ensembles de cabochons constituant des ensembles de touches du clavier. Cette face supérieure du clavier comporte, comme on peut le voir à la figure 3, un premier ensemble (300) de 42 touches à affectation variable réparties en sept lignes de six colonnes et un deuxième ensemble (330) de 42 autres touches à affectation variable. Le premier ensemble est disposé dans l'ouverture (11) tandis que le deuxième ensemble est disposé dans l'ouverture (12) de la face avant du clavier. Une ouverture (13) située dans une zone placée entre les deux ensembles (300,330) de touches à affectation variable permet, comme on le verra plus tard, l'accueil de la reliure d'un livret (2) de personnalisation de l'affectation des touches. Une ouverture (14) permet le passage d'un ensemble de touches (370) d'affectation définie suivant une application bien déterminée. Dans le cas de la figure 3, ces touches indiquent une application à l'hotellerie du clavier, mais il est bien évident que toute autre application peut également être envisagée. Une ouverture (16) de la face avant permet le passage d'un ensemble (350) de touches numériques, et une ouverture (15) permet le passage d'un ensemble (360) de touches fonctionnelles du type de celles nécessaires aux logiciels courants d'application dans le domaine des microordinateurs. L'ensemble (360) de touches fonctionnelles sert également comme touches de prestation et en plus comme touches à affectation variable avec un logiciel d'application. Enfin une ouverture (17) permet le passage d'un ensemble (340) de touches dédiées, par exemple à certaines commandes liées à des problèmes de facturation. Il est bien évident que l'ensemble de touches (340) et l'ensemble de touches (370) peuvent être dédiées à d'autres commandes suivant le type d'application envisagée. Les touches, tout au moins des ensembles (300) et (330) à affectation variable sont constituées par des cabochons (32) tels que représentés à la figure 3. Ces cabochons portent un socle creux à base cubique (322, figure 2), supportant en son centre un parallélépipède rectangulaire (321) de hauteur h et de largeur 1. On notera que, dans le mode de réalisation représenté, la largeur 1 du parallélépipède rectangulaire est inférieure à la dimension latérale L du cube, ceci de façon à permettre l'actionnement des touches tout en évitant d'enfoncer deux touches avec le même doigt. Sur la face supérieure (3210) du parallélépipède rectangulaire (321), chacune des touches des ensembles (300) et (330) porte des gravures alphabétiques qui permettent de constituer ainsi un clavier AZERTY ou un clavier QWERTY selon le type de pays dans lequel on souhaite utiliser ce clavier. Comme on peut le voir sur la figure 3, la partie supérieure de l'ensemble des touches (300,330) est dédiée au clavier AZERTY majuscules tandis que la partie inférieure est dédiée aux touches alphabétiques minuscules. Chacun des cabochons comporte, à l'intérieur de sa base creuse (322) un logement cylindrique (323, figure 1) qui permet de recevoir la tige d'actionnement (60) d'un interrupteur (6). Chaque cabochon est associé à un interrupteur, ainsi la touche (30) est associée à l'interrupteur (SW0), la touche (31) à l'interrupteur (SW1), la touche (32) à l'interrupteur (SW2) et ainsi de suite. L'ensemble des interrupteurs associés aux touches du clavier constitue le tableau matriciel de contact de la figure 4 qui comporte un ensemble de 118 contacts. L'ensemble des interrupteurs (SW30) désigne les interrupteurs associés à l'ensemble des touches (330), l'ensemble des interrupteurs associés à l'ensemble des touches (340) n'ayant pas été représenté sur la figure 2. De même les interrupteurs associés à l'ensemble des touches (350) (360) et (370) ne sont pas représentés sur la figure 2. Les interrupteurs associés aux touches sont montés sur une plaque de circuit imprimé (7) et soudés à la vague sur cette plaque. Sur cette plaque (7) sont également montés, comme représenté à la figure 1 deux photo-émetteurs (E0,E1) à infrarouges et deux photo-récepteurs correspondant (R0,R1). Dans le boîtier (1) est également monté un circuit électronique (4), relié à l'ensemble des interrupteurs (6) et aux photo-émetteurs récepteurs (E,R) par des connecteurs non représentés, ceci par l'intermédiaire des pistes du circuit imprimé (7). La figure 1 représente une vue en perspective du clavier avec une paire de pages (24), (23) qui peut, soit être solidaire de la face avant du boîtier (1A) du clavier, soit être relié aux deux autres pages (20), (21) d'un livret (2). La figure 3 représente une vue de dessus du clavier sans le livret (2) et sans les pages (24) et (23).

Un livret (2) vient se placer de façon amovible sur la face avant (1A) du clavier. Ce livret (2) est constitué, comme on peut le voir à la figure 2 d'une reliure (22), et d'au moins une paire de pages (20),(21). Cette reliure (22) est constituée de façon connue par une barette en matière plastique (224) reliant entre eux des anneaux (223) qui passent dans des ouvertures (214) des pages (20,21) comme on peut le voir à la figure 2. La barette (224) se prolonge par deux languettes (220,221) qui viennent se glisser dans l'ouverture (13) sous la face avant du boîtier (1A). Cette ouverture (13) est de dimension inférieure au diamètre des anneaux (223) de façon à maintenir la reliure au-dessus de la face avant du boîtier (1A). On a ainsi rendu par des moyens simples le livret (2) amovible. Chaque page (20 à 24) comporte un ensemble d'ouvertures (210) rectilignes de dimension adaptée aux dimensions du parallélépipède rectangulaire supérieur (321) des cabochons (32) de façon que ceux-ci puissent se glisser dans les ouvertures (210). Ainsi, dans le cas du clavier représenté à la figure 3, chaque page comportera un ensemble de sept lignes d'ouvertures (210). Entre ces lignes, chaque page comporte un ensemble d'espaces rectangulaires (213) dans lesquels on peut mettre des inscriptions indiquant des affectations possibles des touches. La page (21) peut comporter des inscriptions au recto et au verso de même que pour la page (20), les pages (24),(23) ne comportent des inscriptions que d'un côté. La page (21) comporte également un onglet (212) qui permet un maniement facile de la page. De même, la page (20) comporte, dans le même but, un onglet (202) légèrement décalé par rapport à l'onglet (212). Sur la page (20, figure 2) on n'a pas représenté les ouvertures et les rectangles d'inscription mais il faut garder à l'esprit que toutes les pages sont constituées de la même manière. La page (21) comporte, sur le bord opposé à sa reliure, une encoche (211) disposée en vis-à-vis du photo-émetteur-récepteur (E0,R0). La page (24) comporte également une encoche (240) de dimension suffisante pour ne pas gêner le trajet des rayons des photo-émetteurs-récepteurs (E0,R0;E1,R1) vers les pages (20,21). Comme on peut le voir sur la figure 1 cette encoche (211) permet de détecter par le photo-émetteur-récepteur (E0,R0) la présence de la page (20) du côté correspondant à la page (21). Ainsi, lorsque la page (20) se trouve du côté correspondant à la page (21), le rayon émis par le photo-émetteur (E0) va passer dans l'encoche (211), rencontrer la page (20), se réfléchir sur celle-ci et retourner vers le photo-récepteur (R0). Le photo-émetteur-récepteur (E1,R1) quant à lui permet de détecter la présence de la page (21). Lorsque (R1) et (R0) n'émettent aucun signal, les deux pages (21) et (20) sont du côté de l'ensemble des touches (330), c'est-à-dire à gauche de la reliure (22). Lorsque (R1) émet un signal et (R0) pas de signal, les pages (21) et (20) se trouvent disposées comme représenté à la figure 2 de part et d'autre de la reliure et lorsque (R0) et (R1) émettent tous deux un signal, les pages (21) et (20) se trouvent disposées comme représenté à la figure 1 du côté droit de la reliure, c'est-à-dire en vis-à-vis de l'ensemble des touches (300).

La partie électronique (4) du clavier est constituée, comme on peut le voir à la figure 4 d'un microprocesseur (40) dont le bus d'adresse à seize bits (400) et le bus de donnée à huit bits (401) sont reliés à un ensemble de mémoires. La première mémoire morte (41) reçoit sur son entrée (CE) de validation du boîtier la ligne d'adresse (A15) et sur ses entrées d'adresse, les lignes d'adresse (A0)à (A14). Les huit sorties de donnée de cette mémoire morte sont reliées aux huit lignes de données (D0,D7) du bus de donnée (401). Une mémoire vive (42) de capacité 512 octets, reçoit sur son entrée (CS) le signal (RAM) provenant d'un boîtier (49) , délivre sur ses huit sorties de données les signaux de données aux huit lignes (D0,D7) du bus (401) et reçoit sur ses treize entrées d'adresse les lignes d'adresse (A0,A12) du bus (400). Une mémoire morte programmable (43) de capacité 512 octets reçoit, sur treize entrées d'adresse les lignes d'adresse (A0,A12) du bus (400) et est reliée par ses huit sorties de donnée aux lignes (D0,D7) du bus de données (401). Cette mémoire (43) reçoit sur son entrée (CS) de sélection du boîtier le signal (PR0M) délivré par le boîtier (49). Le boîtier (49) est un multiplexeur qui reçoit en entrée deux lignes d'adresse (A14,A13) et le signal I0/$\overline{M}$ provenant du microprocesseur (40). Ce signal I0/$\overline{M}$ est utilisé pour sélectionner la partie entrée-sortie ou la partie mémoire du circuit de la figure 4. Ainsi lorsque ce signal est désactivé on sélectionne la partie mémoire et lorsqu'il est actif, on sélectionne la partie entrée-sortie correspondant au signal (UARTS), qui est le signal de sélection du boitier universel asynchrone d'émission et de réception (44). Le boîtier (49) est validé par la ligne d'adresse (A15). Ce boîtier (49) délivre sur une première sortie un signal(PG), signal de validation du boîtier (47) permettant de décoder la position des pages du livret (2), sur une deuxième sortie un signal (KB), signal de validation des boîtier de décodage de la matrice des interrupteurs du clavier, sur une troisième sortie un signal (PROM),signal de validation du boîtier de mémoire morte programmable, sur une quatrième sortie un signal (RAM), signal de validation de la mémoire vive (42) et enfin sur une cinquième sortie un signal (UARTS), signal de sélection du boîtier d'entrée-sortie (44) constitué par un circuit universel asynchrone émetteur-récepteur. Lorsque la ligne d'adresse (A15) est active, le boîtier (49) est validé tandis que la mémoire morte (41) n'est pas validée. Par contre, lorsque la ligne (A15) est désactivée, la mémoire morte (41) est activée et le boîtier (49) de multiplexage des adresses est désactivé. La mémoire morte (41) de capacité 2 K-octets permet de stocker le programme de gestion de l'ensemble clavier. La mémoire morte programmable (43), quant à elle, contient les tables des codes des touches du clavier correspondant aux significations respectives des touches suivant les positions des pages du livret (2). Ainsi, lorsque le livret (2) est dans la position représentée à la figure 1, les touches du clavier ont une signification donnée par les codes d'une première table de codage (T1), tandis que lorsque le livret (2) a la position représentée sur la figure 2, les touches du clavier ont une signification donnée par une deuxième table (T2) contenant les codes ASCII correspondant aux significations de ces touches. De même, lorsque les pages du livret sont disposées de façon symétrique par rapport à la disposition de la figure 1, on peut imaginer que les codes ASCII correspondant à la signification de l'actionnement des touches, sont données par une troisième table (T3). Les significations des codes ASCII des tables (T1,T2,T3) varient en fonction des logiciels d'application et des livrets associés et les significations des codes sont par exemple chargées, par le logiciel d'application dans la mémoire morte programmable (43) , à la mise en route d'une nouvelle application . Le boîtier (48) du schéma de la figure 4 est présent à cause de l'utilisation comme microprocesseur (40) du microprocesseur commercialisé par la firme Intel sous la référence 8085. Ce microprocesseur présente la particularité d'avoir des sorties (AD0 à AD7) constituant un bus (402) transmettant à la fois les signaux de donnée (D0) à (D7) et les signaux d'adresse de poids faible (A0) à (A7). Pour ces raisons, il est nécessaire de séparer le bus d'adresse de poids faible (A0) à (A7) du bus de donnée (D0) à (D7) par le circuit (48) qui constitue un tampon dont l'entrée (C) de sélection est validée par la sortie (ALE) du microprocesseur (40). Cette sortie (ALE) fournit le signal de verrou d'adresse qui apparaît pendant le premier cycle d'horloge d'un cycle machine et permet le verrouillage des adresses de poids faible sur le tampon (48). Il est bien évident que l'invention n'est nullement limitée à l'utilisation du microprocesseur Intel 8085 et que dans le cas où on adopterait un autre processeur ayant un bus d'adresse de seize bits et un bus de donnée de huit bits indépendants, on remplacerait les circuits (40,48) par le nouveau processeur, les branchements s'effectuant sur le bus d'adresse (400) et sur le bus de donnée (401). Le processeur (40) reçoit sur ses entrées d'horloge (X1) et (X2) les sorties du circuit horloge (H). Le bus de donnée (401) est relié aux huit sorties d'un circuit tampon (46) dont les entrées de validation (G2,G1) reçoivent respectivement les signaux (KB) provenant du circuit (49) et le signal (RD) provenant du processeur (40). Ce signal (RD) correspond à un ordre de lecture de la part du processeur (40). Ce circuit (46) comporte également huit entrées qui reçoivent chacune une ligne du tableau matriciel constitué par les contacts (SW) des interrupteurs (6) du clavier. Les 118 interrupteurs associés aux touches correspondantes (300,330 à 370) du clavier sont reliés de façon connue suivant un tableau matriciel de huit lignes par seize colonnes. Les contacts d'un interrupteur mettent en liaison une des huit lignes avec une des seize colonnes. Les seize colonnes de la matrice du clavier sont reliées aux sorties d'un circuit (45) constitué par un décodeur "4 donne 16". Ce circuit (45) reçoit sur ses quatre entrées les quatre lignes d'adresse (A0,A3) du bus (400). Le circuit (45) est validé sur son entrée (G1) par le signal (KB) provenant du circuit (49). Ce circuit (45) permet ,par le décodage des quatre lignes d'adresse (A0,A3) un balayage de chacune des seize colonnes, balayage qui permet, par les sorties du circuit (46), d'indiquer la touche actionnée. Cette technique est bien connue de l'homme de métier et ne sera pas décrite plus en détail. Le bus de donnée (401), est également connecté aux huit sorties d'un deuxième circuit (47) décodeur "3 donne 8" dont deux des trois entrées reçoivent respectivement les sorties des photo-récepteurs (R0,R1), la troisième entrée n'étant pas utilisée dans l'exemple de réalisation décrit. Ce circuit décodeur (47) est validé sur son entrée (G1) par le signal (PG) délivré par le circuit (49). Enfin les huit lignes du bus de donnée (401) sont reliées aux huit entrées parallèles de donnée du circuit universel asynchrone émetteur-récepteur (44). Ce circuit (44) peut être constitué par le circuit commercialisé par la firme Intel sous la référence 8251. Ce circuit (44) est relié par la sortie (TD) à l'entrée (RD), et par l'entrée (RD) à la sortie (TD) d'un deuxième circuit (8) du même type constituant également un circuit universel asynchrone d'émission et de réception. Ce circuit (8) communique, par le bus de donnée (91) avec l'unité centrale (9) d'un ordinateur ou d'un micro-ordinateur, le circuit (8) constituant une interface de communication série avec l'interface série du clavier. Les branchements de ces circuits étant classiques pour l'homme de métier, ils ne seront pas décrits plus en détail. Les sorties (TRDY) et (RRDY) du circuit (44) sont reliées chacune à une entrée d'une porte NON-OU à deux entrées (440) dont la sortie est reliée à l'entrée d'un inverseur (441). La sortie de cet inverseur (441) est reliée à l'entrée (55) du circuit (40) constituant le microprocesseur. Cette entrée (55) est une entrée d'interruption. Lorsque l'une ou l'autre des sorties (TRDY) ou (RRDY) est au niveau logique "1", la sortie de l'inverseur sera au niveau logique "1", ce qui provoquera une interruption dans le programme du processeur. Cette interruption a lieu lorsque le transmetteur est prêt ce qui est signalé par le signal (TRDY) au niveau logique "1" ou lorsque le circuit (44) contient un caractère prêt à être envoyé vers le processeur (40). Cette particularité de branchement permet donc de faire fonctionner le circuit (44) en mode esclave par rapport à la carte de l'unité centrale (8,9). L'entrée (C/D) du circuit (44) reçoit la ligne d'adresse (A0) ce qui permet suivant le niveau d'activation ou de désactivation de cette ligne (A0) de distinguer des données ,de mots de contrôle ou d'information des tables. L'entrée (CS) de sélection du boîtier (44) est reliée à la sortie (UARTS) du circuit (49). Enfin, l'entrée d'horloge (H) de ce boîtier (44) reçoit la sortie (CLK) du processeur (40).

Le fonctionnement du circuit de la figure 4 est le suivant: tant que l'unité centrale (9) n'émet pas un ordre en direction du clavier par l'émission d'un signal (TD) vers l'entrée (RD) du circuit (44), signal qui provoque par la sortie (RRDY) une interruption sur l'entrée (55) du circuit (40), le processeur (40) s'occupe uniquement de la gestion du clavier et du décodage de ce clavier en fonction de la table correspondant à la position des pages. Lorsque le processeur (40) est occupé au décodage du clavier, ce dernier commence par faire une lecture des données fournies par les sorties du circuit (47) de décodage de la position des pages puis, dans un deuxième cycle machine, une lecture des données fournies par la sortie du circuit (46) de décodage de la ligne du clavier. La première lecture, lui permet de sélectionner par les lignes d'adresse (A0,A12) une des tables (T1,T3) correspondant à la position réelle des pages du livret (2) sur le clavier, tandis que la deuxième lecture permet de compléter l'adresse (A0,A12) pour sélectionner dans cette table l'adresse du code ASCII du caractère correspondant à la touche actionnée. Le code ASCII correspondant est ensuite délivré sur le bus de donnée (D0,D7) pour être temporairement emmagasiné dans la mémoire vive (42) sous forme de pile. Le fonctionnement du processeur (40) reste le même tant que l'unité centrale (9) n'a pas signalé par les interfaces série (8,44) qu'elle était disposée à accepter des données. Dans le cas où l'unité centrale (9) signale qu'elle est prête à recevoir des données, le processeur (40) est dérouté par l'interruption (55) vers une routine de sortie des données par le circuit (44) vers l'interface (8) de l'unité centrale (9). A ce moment là, les données stockées dans la mémoire vive (42) sous forme de pile sont envoyées en série vers l'interface (8) de l'unité centrale.

Il est bien évident que le nombre de contacts et de touches du clavier peut être modifié suivant les besoins. De même, le nombre de pages du livret amovible peut également être changé et on peut envisager des applications dans lesquelles on disposerait de livrets de quatre pages ou plus, par exemple. Il suffirait, dans ce cas, de rajouter sur la troisième entrée du décodeur (47) un troisième ensemble photo-émetteur-récepteur.

Les livrets peuvent également être fournis avec les inscriptions correspondant aux applications prévues par le logiciel d'application qui tourne dans l'unité centrale (9), mais aussi l'on peut livrer des livrets vierges (sans inscriptions) pour permettre aux utilisateurs d'adapter eux-mêmes les claviers à l'application envisagée suite à une reprogrammation de la mémoire (43).

D'autre part, il est prévu pour certaines applications, de transmettre des données au processeur (40), ces données correspondant à des clés qui seront comparées avec des codes secrets contenus dans la mémoire (43) à des emplacements déterminés par avance. Ces codes secrets et ces clés permettant de verrouiller le clavier pour empêcher son utilisation, soit dans le cadre d'une autre application, soit avec une autre unité centrale que celle prévue initialement ou encore par un autre utilisateur ou pour l'ensemble de ces conditions.

Enfin, l'unité centrale (9), lorsqu'elle souhaite utiliser le clavier universel comme un simple clavier alphanumérique, classique pour micro-ordinateur, interprète les codes ASCII fournis par la table (T1) comme des codes correspondant aux touches d'un clavier alphanumérique. Ce n'est que lorsqu'on utilise un logiciel d'application particulier, tel qu'un logiciel de facturation, que les codes fournis par la table (T1) seront interprétés suivant les affectations reportées sur les pages (24) et (23) du livret, ces affectations correspondant par exemple à des prestations de service.

On a ainsi réalisé un clavier universel comportant en lui-même tous les éléments pour s'adapter à toutes sortes de logiciels d'application développés pour des utilisations sur des micro-ordinateurs ou terminaux d'unités centrales. Ce clavier associé à son logiciel d'application permettant le chargement de la mémoire morte programmable (43) ou à tout autre dispositif équivalent permettant ce chargement, présente une grande flexibilité d'emploi dans des applications multiples qui peuvent aller de l'utilisation dans l'hotèlerie et la restauration à l'utilisation comme centrale de commande pour la télésurveillance, le contrôle de processus ou la programmation d'automates programmables.

**Revendications**

1. Clavier universel pour unité centrale à microprocesseur (9), comportant un ensemble (300) de touches à affectation variable, un livret amovible (2) comportant au moins deux pages (20, 21) indiquant l'affectation des touches, des premiers moyens de détection (R0,R1) à distance de la position des pages (20,21) du livret (2) caractérisé en ce qu'il comporte des seconds moyens (40 à 49) pour fournir à l'unité centrale à microprocesseur (9) en réponse à la détection de la position des pages (20, 21) du livret (2) et en réponse à l'actionnement d'une touche (32) du clavier, un code dépendant de la position des pages du livret (2), lesdits seconds moyens comprenant une interface de clavier (45,46) à balayage, un microprocesseur (40), un bus de données (401) et une mémoire morte programmable (43), ladite interface de clavier à balayage étant connectée par le bus de données (401) au microprocesseur (40) et à la mémoire morte programmable (43) contenant des tables de correspondance (T1 à T3) entre les touches et les codes à fournir à l'unité centrale à microprocesseur (9) selon la position des pages (20,21) du livret détectée par les premiers moyens de détection à distance.

2. Clavier selon la revendication 1, caractérisé en ce qu'il comporte des troisièmes moyens (42) de stockage momentané des codes ASCII à transmettre et correspondant à l'actionnement d'un certain nombre de touches (32) et un circuit (44) universel asynchrone d'émission et de réception, fonctionnant en esclave par rapport à l'unité centrale (9).

3. Clavier selon une des revendications précédentes, caractérisé en ce qu'il comporte une mémoire morte (41) de stockage du programme de gestion du clavier et des commandes provenant de l'unité centrale (9).

4. Clavier selon la revendication 2, caractérisé en ce que les troisièmes moyens (42) de stockage des codes ASCII sont constitués d'une mémoire vive.

5. Clavier selon la revendication 2 ou 3, caractérisé en ce que les touches d'affectation variable (32) comportent sur leur face supérieure (3210) les gravures d'un clavier alphabétique, la sélection dans la mémoire morte programmable des codes ASCII correspondant aux inscriptions alphabétiques étant effectuées suite à un ordre transmis par l'unité centrale (9) au microprocesseur (40) du clavier.

6. Clavier selon la revendication 3, caractérisé en ce que le microprocesseur (40) lit dans une première étape les données délivrées par les photo-récepteurs (R0,R1) des premiers moyens de détection et dans une deuxième étape les données délivrées par l'interface (46) du clavier pour ensuite adresser la mémoire morte programmable (43) qui fournit les codes ASCII en fonction du résultat de cette première lecture et des données délivrées par l'interface clavier à balayage (46,45) dans la deuxième étape.

7. Clavier selon une des revendications précédentes, caractérisé en ce que le livret amovible (2) comporte une reliure (22) à anneaux (223) se prolongeant au delà du format des pages (20,21) par des languettes (220,221) qui se logent sous la face avant (1A) du clavier grâce à une découpe (13) pratiquée dans la face (1A) avant du clavier, dans une zone adjacente à l'ensemble des touches à affectation variable, des encoches (211) disposées en bordure des pages, en vis-à-vis des premiers moyens de détection.

8. Clavier selon la revendication 7, caractérisé en ce qu'il comporte deux ensembles (300,330) de touches à affectation variable séparées par une zone de la face avant du clavier, comportant une ouverture (13) de dimension adaptée à la réception de la reliure (22) du livret amovible (2).

9. Clavier selon la revendication 7 ou 8, caractérisé en ce que le format des pages (20, 21) du livret amovible (2) est légèrement supérieur à l'emplacement occupé par un ensemble de touches (300,330), les touches de l'ensemble comportant des formes saillantes (321) adaptées pour laisser entre elles des espaces, le livret comportant des découpes (210) adaptées aux dimensions des formes saillantes (321) de façon que les parties restantes (213) supportant les légendes viennent se placer dans les espaces libres à proximité de la touche (32) concernée.

10. Clavier selon la revendication 9, caractérisé en ce que les découpes (210) sont des ouvertures rectilignes.

11. Clavier selon la revendication 10, caractérisé en ce que les ouvertures (210) sont pratiquées suivant une direction perpendiculaire à la reliure (22).

12. Clavier selon une des revendications 9 à 11, caractérisé en ce que les touches (32) sont constituées par des cabochons creux ayant une base cubique solidaire sur une face d'une forme saillante (321) constituée par un parallélépipède rectangulaire de section inférieure à la section du cube (322) et correspondant à la largeur des découpes (210).

13. Clavier selon la revendication 10 ou 12, caractérisé en ce que la mémoire morte programmable (43) contient en plus des tables (T1,T3) de décodage du clavier et modifiables suivant les applications, des codes secrets permettant de verrouiller le fonctionnement du clavier pour tout logiciel d'application autre que le logiciel envisagé, pour tout type de machine autre que celui prévu dans l'application et pour tout numéro d'utilisateur autre que celui prévu dans le logiciel d'application.

14. Utilisation du clavier selon une des revendications précédentes avec un micro-ordinateur et un logiciel d'application adapté à un type de commerce ou de service, caractérisé en ce qu'elle constitue un système de gestion émulant un fonctionnement de caisse enregistreuse adaptable au type de commerce ou de service par changement du livret (2) et des données contenues dans la mémoire morte programmable (43).

## Claims

1. Multi-purpose keyboard for a central microprocessor unit (9) and comprising a set (300) of keys with variable allocation, a movable booklet (2) comprising at least two pages (20, 21) indicating the allocation of the keys, first long-distance means (R0, R1) for detecting the position of the pages (20,21) of the booklet (2), wherein it comprises second means (40 to 49) so as to provide the central microprocessing unit (9), in response to detection of the position of the pages (20,21) of the booklet (2) and the activation of a key (32) of the keyboard, with a code depending on the position of the pages of the booklet (2), said second means including one scanning keyboard interface (45, 46), one microprocessor (40), one data bus (401) and one programmable read-only memory (43), said scanning keyboard interface being connected by the data bus (401) to the microprocessor (40) and the programmable read-only memory (43) containing tables (T1 to T3) for correspondence between the keys and the codes to be supplied to the central microprocessing unit (9) according to the position of the pages (20, 21) of the booklet detected by the first long-distance detection means.

2. Keyboard according to claim 1, wherein it comprises third means (42) for the transitory storage of the ASCII codes to be transmitted and corresponding to the activation of a certain number of keys (32) and one multi-purpose asynchronous emission and reception circuit (44) functioning as a slave with respect to the central processing unit (9).

3. Keyboard according to any one of the preceding claims, wherein it comprises one read-only memory (41) for storing the management programme of the keyboard and commands originating from the central processing unit (9).

4. Keyboard according to claim 2, wherein the third means (42) for storing ASCII codes are constituted by a random-access memory.

5. Keyboard according to claim 2 or 3, wherein the keys with variable allocation (32) comprise on their upper face (3210) the gravures of an alphabetic keyboard, the selection in the programmable read-only memory of the ASCII codes corresponding to the alphabetic inscriptions made subsequent to an order transmitted by the central processing unit (9) to the microprocessor (40) of the keyboard.

6. Keyboard according to claim 3, wherein the microprocessor (40) reads during one first stage the data delivered by the photoreceptors (R0, R1) of the first detection means and during one second stage the data delivered by the interface (46) of the keyboard so as to then address the programmable read-only memory (43) which supplies the ASCII codes according to the result of this first reading and the data delivered by the scanning keyboard interface (46, 45) during the second stage.

7. Keyboard according to any one of the preceding claims, wherein the movable booklet (2) comprises one book binding (22) with rings (223) extending beyond the format of the pages (20, 21) by virtue of tongues or strips (220, 221) housed under the front face (1A) of the keyboard by means of a cutting (13) made in the front face (1A) of the keyboard in a zone adjacent to the set of keys with variable allocation, notches (211) being disposed at the edges of the pages opposite the first detection means.

8. Keyboard according to claim 7, wherein it comprises two sets (300, 330) of keys with variable allocation separated by one zone of the front face of the keyboard and comprising one opening (13) of suitable size for receiving the book binding (22) of the movable booklet (2).

9. Keyboard according to claim 7 or 8, wherein the format of the pages (20, 21) of the movable booklet (2) is slightly larger than the location occupied by the set of keys (300), the keys of the unit comprising projecting forms (321) adapted in such a way as to leave spaces between them, the booklet comprising cuttings (210) adapted to the dimensions of the projecting forms (321) so that the remaining portions (213) supporting the captions is placed inside the free spaces close to the key (32) concerned.

10. Keyboard according to claim 9, wherein the cuttings (210) are rectilinear openings.

11. Keyboard according to claim 10, wherein the openings (210) are made along a direction perpendicular to the book binder (22).

12. Keyboard according to any one of claims 9 to 11, wherein the keys (32) are constituted by hollow bullen nails having an integral cubical base on one face of a projecting form (321) constituted by one rectangular parallelepiped with a section smaller than the section of the cube (322) and corresponding to the width of the cuttings (210).

13. Keyboard according to claim 10 or 12, wherein the programmable read-only memory (43) further contains tables (T1, T3) for decoding the keyboard and able to be modified according to particular applications, secret codes making it possible to lock the functioning of the keyboard for any application software other than the software envisaged for any type of machine other than the one provided in the application and for any user number other than the one provided in the application software.

14. Use of the keyboard according to any one of the preceding claims with a microcomputer and one application software adapted to a type of business of service, wherein it constitutes a management system emulating the functioning of a cash register adaptable to the type of business or service by changing the booklet (2) and the data contained in the programmable read-only memory (43).

**Patentansprüche**

1. Universaltastatur für eine Mikroprozessor-Zentraleinheit (9) mit einem Tastenfeld (300) mit veränderlicher funktioneller Zuordnung, einem abnehmbaren Handbuch mit mindestens zwei Seiten (20, 21) sowie ersten Mitteln (R0, R1) zur Fernerkennung der Stellung der Seiten (20, 21) des Handbuchs (2), dadurch gekennzeichnet, daß sie zweite Mittel (40 - 49) besitzt, um der Mikroprozessor-Zentraleinheit (9) in Erwiderung auf die Erkennung der Position der Seiten (20, 21) des Handbuchs (2) und auf die Betätigung einer Taste (32) der Tastatur einen Code zu liefern, der von der Stellung der Seiten des Handbuchs (2) abhängt, wobei die o.a. zweiten Mittel aus einer Tastenfeldschnittstelle (45, 46) mit Abtastung, einem Mikroprozessor (40), einem Datenbus (401) und einem programmierbaren Festspeicher (43) bestehen und die o.a. Tastenfeldschnittstelle (45, 46) mit Abtastung über den Datenbus (401) an den Mikroprozessor (40) und an den programmierbaren Festspeicher (43) angeschlossen ist und Bezugstabellen (T1 - T3) zwischen den Tasten und den an die Zentraleinheit (9) zu übertragenden Codes je nach der von den ersten Mitteln zur Fernerkennung erkannten Position der Seiten (20, 21) des Handbuchs besitzt.

2. Tastatur nach Patentanspruch 1, dadurch gekennzeichnet, daß sie dritte Mittel (42) zur zeitweiligen Speicherung der zu übertragenden ASCII-Codes besitzt, die der Betätigung bestimmter Tasten (32) und einer universalen, asynchronen Sende- und Empfangsschaltung (44) entsprechen, die gegenüber der Zentraleinheit (9) als Slave arbeitet.

3. Tastatur nach einem der obigen Patentansprüche, dadurch gekennzeichnet, daß sie einen Festspeicher (41) für das Steuerprogramm der Tastatur und die von der Zentraleinheit (9) kommenden Befehle besitzt.

4. Tastatur nach Patentanspruch 2, dadurch gekennzeichnet, daß die dritten Mittel (42) zur Speicherung der ASCII-Codes aus einem flüchtigen Arbeitsspeicher bestehen.

5. Tastatur nach einem der Patentansprüche 2 oder 3, dadurch gekennzeichnet, daß auf den Tasten (32) mit unterschiedlicher Zuordnung auf der Oberseite (3210) die Zeichen eines alphabetischen Tastenfeldes eingraviert sind, wobei die Wahl der ASCII-Codes im programmierbaren Festspeicher den eingravierten alphabetischen Eintragungen entsprechen, die durch einen Befehl von der Zentraleinheit (9) an den Mikroprozessor (40) der Tastatur erfolgen.

6. Tastatur nach Patentanspruch 2, dadurch gekennzeichnet, daß der Mikroprozessor in einer ersten Phase die über die Fotozellen (R0, R1) der ersten Erkennungsmittel gelieferten Daten ausliest und in einer zweiten Phase die über die Schnittstelle (46) der Tastatur gelieferten Daten ausliest, um sich daraufhin an den programmierbaren Festspeicher (43) zu wenden, der die ASCII-Codes entsprechend dem Ergebnis des ersten Auslesens und den über die Tastenfeldschnittstelle mit Abtastung (46, 45) gelieferten Daten in der zweiten Phase liefert.

7. Tastatur nach einem der obigen Patentansprüche, dadurch gekennzeichnet, daß das abnehmbare Handbuch (2) einen Einband (22) mit Ringen (223) besitzt, die durch Zungen (220, 221) über das Format der Seiten (20, 21) hinausreichen, wobei diese Zungen aufgrund eines Ausschnittes (13) in der Frontplatte (1A) der Tastatur unter dieser in einem Bereich sitzen, der an die Tastenfeld mit variabler Zuordnung angrenzt, wobei Einschnitte (211) an den Seitenrändern angebracht sind, die den ersten Erkennungsmitteln gegenüberliegen.

8. Tastatur nach Patentanspruch 7, dadurch gekennzeichnet, daß sie 2 Tastenfeldern mit variabler Zuordnung (300, 330) besitzt, die durch einen Bereich auf der Frontplatte der Tastatur getrennt sind, die eine Öffnung (13) angemessener Größe besitzt, in die der Einband (22) des abnehmbaren Handbuchs (2) eingeführt werden kann.

9. Tastatur nach Patentanspruch 7 oder 8, dadurch gekennzeichnet, daß das Format der Seiten (20, 21) des abnehmbaren Handbuchs (2) etwas größer ist als die von den Tasten (300, 330) eingenommene Fläche, wobei die Tasten dieses Tastenfeldes hervorspringende Formen (321) mit Zwischenräumen besitzen, daß das Handbuch (2) mit den seitlichen Einschnitten (213) so ausgeführt ist, daß auf den verbleibenden Randteilen (213) die Legenden enthalten, die in den freien Zwischenräumen in der Nähe der entsprechenden Taste (32) zu liegen kommen.

10. Tastatur nach Patentanspruch 9, dadurch gekennzeichnet, daß diese Ausschnitte (210) geradlinige Öffnungen sind.

11. Tastatur nach Patentanspruch 10, dadurch gekennzeichnet, daß die Ausschnitte (210) senkrecht zum Einband (22) verlaufen.

12. Tastatur nach Patentanspruch 9 bis 11, dadurch gekennzeichnet, daß die Tasten (32) aus hohlen Tastenkappen mit einem festen würfelförmigen Sockel bestehen, die auf einer Seite eine hervorspringende Form (321) besitzen, die aus einem rechteckigen Quader besteht, dessen Querschnitt unter dem des Würfels (322) liegt und der Breite der Ausschnitte (210) entspricht.

13. Tastatur nach Patentanspruch 10 oder 12, dadurch gekennzeichnet, daß der programmierbare Festspeicher (43) zusätzliche, je nach Anwendung veränderbare Tasten (T1, T3) zum Decodieren der Tastatur besitzt, wobei die Funktion der Tastatur durch Geheimcodes für jede andere Software als die gewünschte bzw. jedes andere Gerät als das für die jeweilige Anwendung gewünschte sowie für jede andere Anwendernummer als die von der Anwendungssoftware vorgesehene verriegelt werden kann.

14. Anwendung der Tastatur nach einem der obigen Patentansprüche mit einem Microcomputer und einer Anwendungssoftware, die einer Handels- oder Dienstleistungstätigkeit entspricht, dadurch gekennzeichnet, daß sie ein Steuersystem darstellt, durch die eine Registrierkassenfunktion emuliert wird, die sich durch Auswechseln des Handbuchs (2) und der Daten in dem programmierbaren Festspeicher (43) an die jeweilige Art der Handels- oder Dienstleistungstätigkeit anpassen läßt.

Fig:1

EP 0 245 123 B1

Fig:2

Fig:3

EP 0 245 123 B1

Fig:4